# EUROPÄISCHE PATENTSCHRIFT

(11) **EP 0 374 201 B1**
(45) Veröffentlichungstag und Bekanntmachung des Hinweises auf die Patenterteilung: **22.12.1993**
(21) Anmeldenummer: 89903083.7
(22) Anmeldetag: 16.03.1989
(51) Int. Cl.: B01F 15/02, B29B 7/60

(54) **VERFAHREN ZUR HERSTELLUNG VON FORMTEILEN AUS HEISSHÄRTENDEN KUNSTSTOFFEN UND EINRICHTUNG ZUR DURCHFÜHRUNG DESSELBEN**
PROCESS AND DEVICE FOR MANUFACTURING MOULDINGS FROM THERMOSETTING PLASTICS
PROCEDE ET AGENCEMENT DE FABRICATION DE PIECES MOULEES EN MATIERES PLASTIQUES THERMODURCISSABLES

(30) Priorität: 18.03.1988 CH 1039/88
(43) Veröffentlichungstag der Anmeldung: 27.06.1990
(73) Patentinhaber: SUTER & CO, CH-4054 Basel (CH)
(72) Erfinder: SUTER, Alois, CH-4054 Basel (CH)
(74) Vertreter: Fenner, Werner, Dipl.-Ing.
(86) Internationale Anmeldenummer: CH8900050
(87) Internationale Veröffentlichungsnummer: WO8908496

(56) Entgegenhaltungen:
- EP-A- 0 110 530
- CH-A- 532 413
- DE-A- 2 453 810
- DE-A- 3 018 729
- US-A- 3 029 069

## Beschreibung

Die vorliegende Erfindung betrifft ein Verfahren zur Herstellung von Formlingen aus heisshärtenden Kunststoffen gemäss Oberbegriff von Patentanspruch 1.

Ein derartiges Verfahren dient u.a. der Herstellung hochwertiger Bauteile, insbesondere solche zur Isolation elektrischer Leitungen und Apparate.

Insbesondere die dazu verwendeten dynamischen Mischer können aufgrund ihrer hohen Drehzahl an den verschiedenen Harzkomponenten eine Sedimentation, grosse Scherkräfte und starke Erwärmungen bewirken. Die dadurch erreichte Turbulenz führt zu Gaseinschlüssen in der Giessmasse, die eine Qualitätseinbusse an den Formteilen nach sich ziehen.

Bekannte dynamische Mischer sind bei der Verarbeitung von Mehrkomponenten-Systemen mit den weiteren Nachteilen behaftet, dass die durch Temperatur-, Viskositäts- und Mengenänderung wechselnden Strömungsverhältnisse das Erreichen eines homogenen Mischgutes bzw. einer am Ende zu vergiessenden Kunststoffmasse, auch Epoxiharz genannt, erschweren oder verhindern, weil diese Zustandsänderungen in den durchströmten Leitungen und Räumen zu Turbulenzen führen, die auch unerwünschte Lufteinschlüsse zur Folge haben.

An die Erfindung ist deshalb die Behebung dieser Mängel zur Aufgabe gestellt.

Erfindungsgemäss zeichnet sich als Lösung dieser Aufgabe ein Verfahren gemäss dem kennzeichnenden Teil des Patentanspruches 1 aus.
Dadurch kann eine Sedimentation in den zugeführten Komponenten weitgehend verhindert werden. Gleichzeitig kann durch den erzielten Vormischeffekt eine merkbare Minderung der Drehzahl des Mischers und damit ein geringeres Mass an Scherkräften erreicht werden. Die zusätzliche Erwärmung beim Mischen wird reduziert und das Aufnahmevermögen der die Komponenten führenden Leitungen kann verbessert, kurz, es kann eine den hohen Anforderungen an die Qualität und an eine wirtschaftliche Herstellung gerecht werdende, subtilere Arbeitweise vorgenommen werden.
Ueberdies tritt eine zusätzliche Beruhigungsphase und eine Vormischung bei wählbarer Dosierung der einzelnen Komponenten in der Kunststoffmasse ein.

Zur Durchführung des eingangs erwähnten Verfahrens eignet sich insbesondere eine Einrichtung zum Niederdruckgiessen von Formteilen aus heisshärtenden Kunststoffen mehrerer Komponenten, wie Harzen, Füllstoffen und Härtern, bestehend aus einem einen antreibbaren Rotor zur Bildung eines dynamischen Mischers aufnehmenden Gehäuse, welches mit den Zuführleitungen für die Komponenten verbunden ist und eine Austrittsöffnung für die Kunststoffmasse aufweist.
Diese Einrichtung zeichnet sich durch die besondere Ausgestaltung einer dem dynamischen Mischer vorgeschalteten Zuführvorrichtung für die verwendeten Komponenten aus, indem durch eine an dem rückwärtigen Ende des Mischers, konzentrisch zur Drehachse des Rotors, an das Gehäuse anschliessende Kammer, die von mehreren, den einzelnen Komponenten zugeordneten, ringförmigen Zuführkanälen mit Abstand umgeben und mit diesen leitungsverbunden ist, angeordnet ist.

Diese Zuführvorrichtung gestattet ein laminares Strömen der Komponenten in eine Kammer, in der sie unter einem Vormischeffekt ineinanderfliessen, bevor sie vom dynamischen Mischer erfasst und in eine homogene Kuststoffmasse verwandelt werden. Der laminare Strömungszustand und der durch das Ineinanderfliessen erreichbare Vormischeffekt begünstigen die erforderliche Homogenität der zu vergiessenden Kunststoffmasse und die Ausgeglichenheit des Giessvorganges.

Die in die Kamer mündenden Zuführkanäle der Komponenten weisen bezüglich ihrer Längserstreckung vorteilhaft axial versetzt angeordnete Durchtrittsöffnungen auf, sodass die einzelnen Komponenten flächenartig sich mischend in die Kammer dringen und dort auf einem längeren Fliessweg unter Expansionswirkung vor dem letzten Mischvorgang ineinanderfliessen können.

Zweckmässigerweise sind die Durchtrittsöffnungen am stromabwärts gerichteten Ende der ringförmig ausgebildeten Zuführkanäle verteilt angeordnet, sodass schon vorzeitig ein Mischeffekt unter den Komponenten eintreten kann.

Zur Bildung mehrerer ringförmiger Zuführkanäle ist wenigstens ein konzentrisch angeordneter Düsenring vorgesehen, der die Komponenten vor dem Eintritt in die Kammer trennt, andererseits jedoch eine breitflächige Ausdehnung auf die fliessenden Ströme bewirkt.

Bei Verwendung eines Düsenringes bildet dieser einerseits mit dem Mischzylinder bzw. der Wand der Kammer einen inneren und andererseits mit einem Zwischenring des Mischergehäuses einen äusseren ringförmigen Zuführkanal, sodass auf einfache Weise eine ruhige Komponentenströmung erzielt werden kann.

Zur Anordnung von Durchtrittsöffnungen an dem stromabwärtsliegenden Ende eines/der Düsenringe bedarf es vorteilhaft einer radial nach aussen überstehenden oder radial nach innen zurückversetzten Schulter.

Letztere weist am Umfang verteilt sich radial erstreckende, Kanäle bildende Ausnehmungen auf, die den äusseren Zuführkanal mit der Kammer verbinden.
Selbstverständlich wäre es möglich, an Stelle einer Schulter am Düsenring den benachbarten Zwischenring mit einem nach innen vorstehenden ringförmigen Rand auszubilden und an diesem verteilt Ausnehmungen vorzusehen, so dass der äussere Zuführkanal mit der Kammer verbunden ist, wobei in jedem Fall die Düsenringe axial unverschiebbar angeordnet und zweckmässig mit den das Gehäuse bildenden Zwischenringen verbunden sind.

Vorteilhaft sind die das Gehäuse bildenden Zwischenringe mit jeweils einer die Zuführleitung der Komponenten mit dem ihr zugeordneten Zuführkanal verbindenden Radialbohrung ausgestattet, sodass auf einfache Art eine günstige Anordnungsweise der betroffenen Konstruktionsteile bwz. eine kompakte Ausführung des Mischers erzielt werden kann.

Dadurch dass der an seinem rückwärtigen Ende eine Kammer aufweisende Mischzylinder zwischen einer vorderen Gehäuseabschlussplatte und einem daran anschliessenden Zwischenring des Gehäuses und die den Mischzylinder bzw. die Kammer konzentrisch umgebenden, sich wenistens annähernd an eine hintere Gehäuseabschlussplatte erstreckenden Düsenringe zwischen jeweils zwei Zwischenringen befestigbar sind, kann die vorliegende Ausführungsform auch als wartungsfreundlich bezeichnet werden.

Die Radialbohrungen der Zwischenringe sind vorteilhaft verteilt an dem Umkreis des Gehäuses angeordnet, wobei ihre Positionen durch besondere Markierungen bzw. durch Stift- oder Schraubverbindungen bestimmt werden.

Zur Erhöhung der Geschwindigkeit der Kunststoffmasse an den Durchtrittsöffnungen der Zuführkanäle ist es zweckmässig, wenn die Zwischenringe oder Düsenringe an ihrem stromabwärts liegenden Ende einen sich nach innen verengenden Querschnitt aufweisen.

Nachstehend sind die verfahrensmässige Erfindung und der Erfindungsgegenstand anhand der in der Zeichnung dargestellten Ausführungsbeispielen näher erläutert. Es zeigen:
- Fig. 1: einen Längsschnitt durch einen Erfindungsgegenstand nach der Linie I - I in Fig. 3,
- Fig. 2: einen Längsschnitt durch eine alternative Ausführungsform des Erfindungsgegenstandes nach der Linie I - I in Fig.3 und
- Fig. 3: einen Querschnitt durch den Erfindungsgegenstand nach der Linie III - III in Fig. 2.

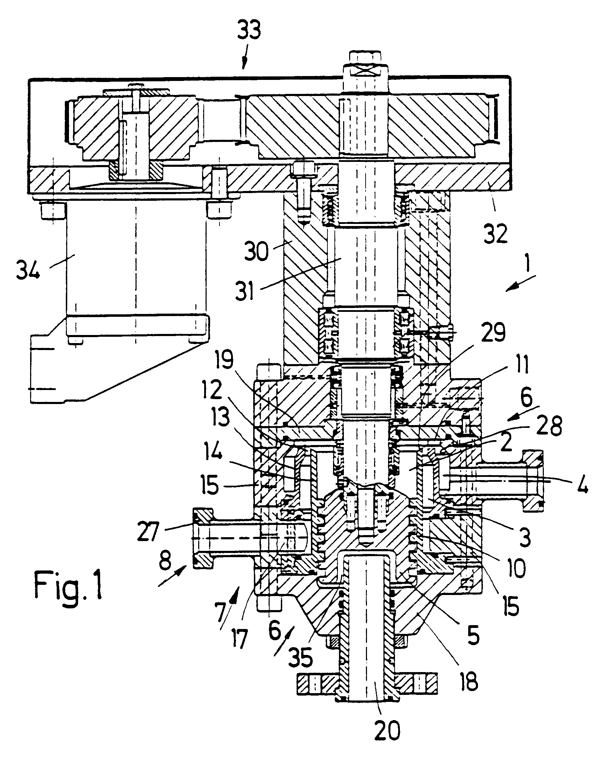

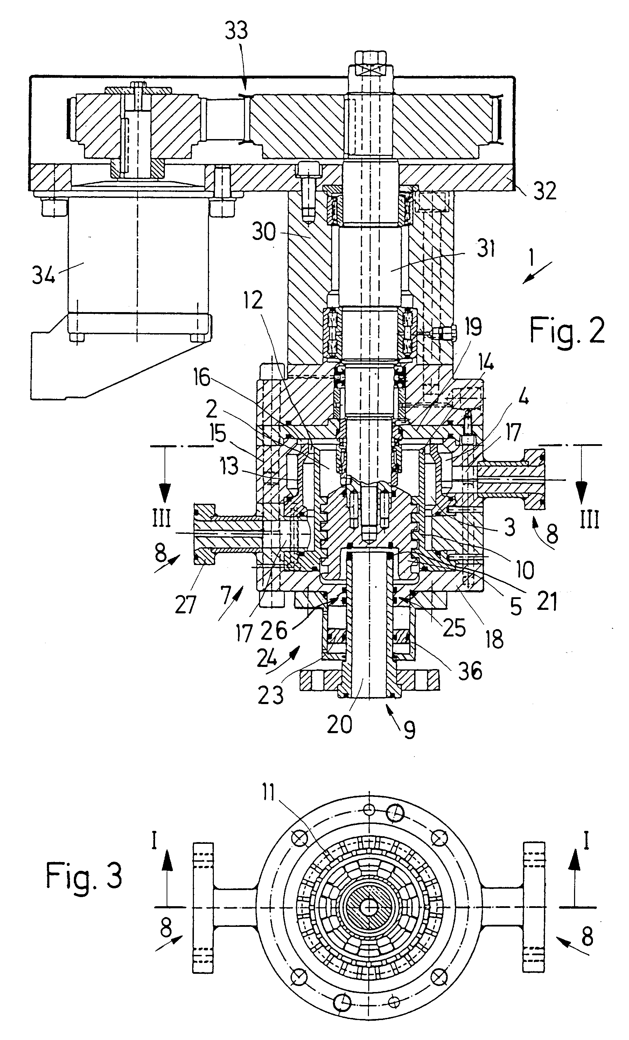

Die Figuren 1 bis 3 zeigen eine Einrichtung 1 zur Durchführung des vorliegenden erfindungsgemässen Verfahrens, wonach an dem rückwärtigen Ende eines Mischers 6, konzentrisch zur Drehachse des Rotors 5, eine an den Mischzylinder 10 anschliessende Kammer 2, die von mehreren, den einzelnen Komponenten einer Kuststoffmasse zugeordneten, ringförmig ausgebildeten Zuführkanälen 3, 4 mit Abstand umgeben, mit diesen leitungsverbunden ist, vorgesehen ist, derart, dass die Komponenten laminar strömend zusammengeführt werden können. Diese Einrichtung 1 ist über ein Lagergehäuse 30, das die Antriebswelle 31 des Rotors 5 aufnimmt, an einer Tragplatte 32 befestigt, an der ein ein Zahnriemenvorgelege 33 der Antriebswelle 31 antreibender Motor 34 vorgesehen ist. Die weiteren Einzelheiten bezüglich Ausbildug der Antriebskonstruktion ist den Figuren 1 und 3 zu entnehmen. Der Rotor 5 des Mischers 6 ist am vorderen Ende der Antriebswelle 31 verschraubt und verstiftet und kann wie der Mischzylinder 10 auch ausgewechselt werden. An den Mischzylinder 10 schliesst nach hinten eine Kammer 2 an, die durch eine zylindrische Wand 14 gebildet wird. Die Kammer 2 ist von mehreren, den einzelnen Komponenten der Kunststoffmasse zugeordneten, ringförmig ausgebildeten Zuführkanälen 3, 4 umgeben und mit diesen leitungsverbunden. Unter Ausnutzung der laminaren Strömungseigenschaften münden die Zuführkanäle 3, 4 an dem hinteren Ende der Kammer 2 in den von letzterer gebildeten Hohlraum und entwickeln so eine weitgehend turbulenzfreie Vormischung. Zu diesem Zweck weisen die Zuführkanäle 3, 4 Durchtrittsöffnungen 11, 12 auf, die gegenseitig versetzt bzw. nebeneinander angeordnet sind, derart, dass die flüssigen Komponenten von aussen radial nach innen in die Kammer strömen und sich dort willkürlich verteilen und mischen können. Die Zufuhr der Komponenten erfolgt unter Druck mittels Pumpen. Die um die mit dem Rotor 5 verbundene Antriebswelle 31 angelegte ringförmige Kammer ist an dem hinteren Ende durch eine dichte Abschlussplatte 19 begrenzt. Zur Bildung der Zuführkanäle 3, 4 ist ein Düsenring 13 zwischen der Kammer 2 bzw. deren Wand 14 und wenistens einem Zwischenring 15 des Mischergehäuses 7 konzentrisch angeordnet, wobei der Düsenring 13 an einer dafür vorgesehenen Ausnehmung zweier Zwischenringe 15 bewegungslos eingelegt ist. An den stromabwärts liegenden Enden der Zuführkanäle 3, 4 besitzt der Düsenring 13 am Umfang verteilt angeordnete Durchtrittsöffnungen 11. Der mit dem Mischzylinder 10 bzw. der Wand 14 und einem Zwischenring 15 des Mischergehäuses 7 einen inneren bzw. einen äusseren Zuführkanal 3 bzw. 4 bildende Düsenring 13 weist am stromabwärts liegenden Ende eine Schulter 16 auf, an deren Umfang verteilt sich radial erstreckende, die Durchtrittsöffnungen 11, 12 bildende Ausnehmungen sich befinden. Die Schulter 16 kann sowohl radial nach aussen überstehen wie auch nach innen zurückversetzt ausgebildet sein, sodass sich jeweils auf den Umfang bezogen verteilt fächerartige Durchtrittsöffnungen 11, 12 bilden. Die das Mischergehäuse 7 bildenden Zwischenringe 15 sind mit Radialbohrungen 17 versehen, die die einander zugeordneten Zuführkanäle 3, 4 und Zuführleitungen 8, der einzelnen Komponenten verbinden. Zu diesem Zwecke sind radial abstehende Leitungsstutzen 27 am Umfang der Zwischenringe 15 verteilt angebracht. Die Einrichtung 1 erweist sich insgesamt als kompakte Ausführungsform, dadurch, dass die Kammer 2 unmittelbar an den Mischzylinder 10 anschliesst und der sich wenigstens annähernd an das hintere Ende der Kammer 2 erstreckende Düsenring 13 (es können auch mehrere sein) zwischen den durch eine vordere 18 und hintere Gehäuseabschlussplatte 19 eingesetzten Zwischenringen 15 verankert sind. Im übrigen sind sowohl Zwischenring 15 als auch der Düsenring 13 im Bereich ihrer Mündung in die Kammer 2 mit die Strömungsumlenkung begünstigenden konstruktiven Massnahmen versehen, d.h. der Massestrom wird nach innen umgelenkt, wozu eine entsprechende Umlenkkante 28 am Zwischenring 15 vorgesehen ist und die Wand 14 der Kammer 2 eine zurückversetzte Anschrägung 29 aufweist. Unter dem Zuführungsdruck gelangen die sich schon in der Kammer 2 verteilenden Komponenten in den Mischer 6 und in die Ausflussleitung 20, die in der vorderen Gehäuseabschlussplatte dicht verankert ist. Nach Verlassen des Mischers 6 strömt die Kunststoffmasse über die Stirnfläche des Rotors 5 zurück durch einen aus einer zylindrischen Bohrung an der Stirnfläche des Rotors 5 und der Aussenfläche der rohrartigen Ausflussleitung 20 gebildeten Ringspalt 35 in die Ausflussleitung 20, die mittel- oder unmittelbar an eine Form (nicht sichtbar) angeschlossen ist.
Konzentrisch zur Drehachse des Rotors 5 ist an diesen anschliessend die Ausflussleitung 20 für die zu vergiessende Kunststoffmasse vorgesehen. Wenigstens ein Teil der Ausflussleitung 20 ist axial verschiebbar und mit ihrem dem Mischer zugekehrten Ende dicht an die Stirnseite des Rotors verschiebbar.
Eine Dichtung 21 an der Stirnseite des dem Rotor 5 zugekehrten Ende der Ausflussleitung 20 begünstigt die Dichtheit an dieser Stelle.
Alternativ kann die Stirnseite des Rotors 5 mit einer Nut zur Aufnahme einer Dichtung und/oder zum Eintauchen der Ausflussleitung 20 ausgebildet sein.
Zur Betätigung der Ausflussleitung 20 eignet sich bspw. eine Kolben-Zylinder-Einheit 24, wobei als Kolben 23 ein Ring mit der Ausflussleitung 20 dicht verbunden ist, der den ihn umgebenden Zylinder 36 in zwei hydraulisch oder pneumatisch beaufschlagbare Räume trennt. Die Kolben-Zylinder-Einheit 24 ist mittels Flansch am Zylinder an der vorderen Gehäuseabschlussplatte 18, durch die die Ausflussleitung 20 hindurchdringt, befestigt. Die Gehäuseabschlussplatte 18 und die Ausflussleitung 20 bilden eine Gleitführung 25, die mit einer Dichtungsanordnung 26 vesehen ist.

## Patentansprüche

1. Verfahren zur Herstellung von Formteilen aus heisshärtenden Kunststoffen mehrerer Komponenten, vornehmlich Harzen, Füllstoffen und Härtern, durch Niederdruckgiessen, bei dem die zur Bildung einer homogenen Kunststoffmasse zugeführten Komponenten vor dem Verlassen der Giesseinrichtung gemischt werden, dadurch gekennzeichnet, dass die flüssigen Komponenten laminär strömend vor dem Mischen in einer Kammer zusammengeführt werden.

2. Verfahren nach Anspruch 1, dadurch gekennzeichnet, dass die flüssigen Komponenten über jeweils einen Ringspalt (3, 4) der Kammer (2) zugeführt werden.

3. Einrichtung zur Durchführung des Verfahrens nach einem der Patentansprüche 1 und 2, bestehend aus einem einen antreibbaren Rotor (5) zur Bildung eines dynamischen Mischers (6) aufnehmenden Gehäuse (7), welches mit den Zuführleitungen (8) der Komponenten verbunden ist und eine Austrittsöffnung (9) für die Kunststoffmasse aufweist, gekennzeichnet durch eine an dem rückwärtigen Ende des Mischers (6) konzentrisch zur Drehachse des Rotors (5), an den Mischzylinder (10) anschliessenden Kammer (2), die von mehreren, den einzelnen Komponenten zugeordneten, ringförmig ausgebildeten Zuführkanälen (3, 4) mit Abstand umgeben und mit diesen leitungsverbunden ist.

4. Einrichtung nach Anspruch 3, dadurch gekennzeichnet, dass die in die Kammer (2) mündenden Zuführkanäle (3, 4) der Komponenten versetzt angeordnete Durchtrittsöffnungen (11, 12) ausweisen.

5. Einrichtung nach Anspruch 4, dadurch gekennzeichnet, dass die Durchtrittsöffnungen (11, 12) am stromabwärts liegenden Ende wenigstens eines Zuführkanals (3, 4) verteilt angeordnet sind.

6. Einrichtung nach einem der Ansprüche 3 bis 5, dadurch gekennzeichnet, dass die ringförmigen Zuführkanäle (3, 4) aus wenigstens einem konzentrisch angeordneten Düsenring (13) gebildet sind.

7. Einrichtung nach einem der Ansprüche 4 bis 6, dadurch gekennzeichnet, dass die Durchtrittsöffnungen (11, 12) an den Enden der Zuführkanäle (3, 4) versetzt zueinander angeordnet sind.

8. Einrichtung nach einem der Ansprüche 3 bis 7, dadurch gekennzeichnet, dass der Düsenring (13) mit dem Mischzylinder (10) bzw. der Wand (14) der Kammer (2) einen inneren Zuführkanal (3) und mit einem Zwischenring (15) des Gehäuses (7) einen äusseren Zuführkanal (4) bildet.

9. Einrichtung nach einem der Ansprüche 6 bis 8, dadurch gekennzeichnet, dass zur Bildung der Durchtrittsöffnungen (11, 12) an dem stromabwärts liegenden Ende des Düsenringes (13) eine radial nach aussen überstehende oder radial nach innen zurückversetzte Schulter (16) vorgesehen ist.

10. Einrichtung nach Anspruch 9, dadurch gekennzeichnet, dass die Schulter (16) am Umfang verteilt sich radial erstreckende Durchtrittsöffnungen (11) bildende Ausnehmungen aufweist.

11. Einrichtung nach einem der Ansprüche 6 bis 10, dadurch gekennzeichnet, dass der/die Düsenring/e (13) axial unverschiebbar angeordnet und an den das Mischergehäuse (7) bildenden Zwischenringen (15) befestigt ist/sind.

12. Einrichtung nach einem der Ansprüche 8 bis 11, dadurch gekennzeichnet, dass die das Gehäuse (7) bildenden Zwischenringe (15) mit jeweils einer die Zuführleitung (8) der Komponenten mit dem ihr zugeordneten Zuführkanal (3, 4) verbindenden Radialbohrung (17) versehen sind.

13. Einrichtung nach einem der Ansprüche 8 bis 12, dadurch gekennzeichnet, dass der an seinem rückwärtigen Ende eine Kammer (2) aufweisende Mischzylinder (10) zwischen einer vorderen Gehäuseabschlussplatte (18) und einem daran anschliessenden Zwischenring (15) des Gehäuses (7) und die den Mischzylinder (10) bzw. die Kammer (2) konzentrisch umgebenden, sich wenigstens annähernd an eine hintere Gehäuseabschlussplatte (19) erstreckenden Düsenring (13) zwischen jeweils zwei Zwischenringen (15) befestigt sind.

14. Einrichtung nach einem der Ansprüche 12 und 13, dadurch gekennzeichnet, dass die Radialbohrung (17) der Zwischenringe (15) an dem Umkreis verteilt angeordnet sind.

15. Einrichtung nach einem der Ansprüche 8 bis 14, dadurch gekennzeichnet, dass die Zwischenringe (15) bzw. Düsenringe (13) an den stromabwärts liegenden Enden einen sich nach innen verengenden Querschnitt aufweisen.

## Claims

1. Process for manufacturing mouldings from thermosetting plastics containing several components, especially resins, fillers and hardeners, by low-pressure casting, in which the components supplied for the formation of a homogeneous plastic composition are mixed prior to leaving the casting equipment, characterised in that the liquid components are brought together by laminar flow prior to mixing in a chamber.

2. Process according to claim 1, characterised in that the liquid components are each fed to the chamber (2) via an annular passage (3, 4).

3. Device for carrying out the process according to either of claims 1 and 2, consisting of a housing (7) receiving a drivable rotor (5) for the formation of a dynamic mixer (6), the said housing being connected to the feed lines (8) for the components and having an outlet opening (9) for the plastic composition, characterised by a chamber (2) which is connected to the mixing cylinder (10) at the rear end of the mixer (6) concentrically with the axis of rotation of the rotor (5) and is surrounded at a distance by a plurality of annular feed channels (3, 4) associated with the individual components, the said chamber being connected by means of lines to the said feed channels.

4. Device according to claim 3, characterised in that the feed channels (3, 4) for the components opening into the chamber (2) have openings (11, 12) arranged in an offset manner.

5. Device according to claim 4, characterised in that the openings (11, 12) are distributed at the downstream end of at least one feed channel (3, 4).

6. Device according to one of claims 3 to 5, characterised in that the annular feed channels (3, 4) are formed by at least one concentrically arranged die ring (13).

7. Device according to one of claims 4 to 6, characterised in that the openings (11, 12) are arranged in an offset manner at the ends of the feed channels (3, 4).

8. Device according to one of claims 3 to 7, characterised in that the die ring (13) forms an inner feed channel (3) with the mixing cylinder (10) or the wall (14) of the chamber (2) and an outer feed channel (4) with an intermediate ring (15) of the housing (7).

9. Device according to one of claims 6 to 8, characterised in that a radially outwardly projecting or a radially inwardly recessed shoulder (16) is provided in order to form the openings (11, 12) at the downstream end of the die ring (13).

10. Device according to claim 9, characterised in that the shoulder (16) has recesses forming radially extending openings (11) distributed over its circumference.

11. Device according to one of claims 6 to 10, characterised in that the die ring/s (13) is/are arranged in an axially immovable manner and is/are secured to the intermediate rings (15) forming the mixer housing (7).

12. Device according to one of claims 8 to 11, characterised in that the intermediate rings (15) forming the housing (7) are each provided with a radial bore (17) connecting the supply line (8) for the components to the associated feed channel (3, 4).

13. Device according to one of claims 8 to 12, characterised in that the mixing cylinder (10) having a chamber (2) at its rear end is secured between a front housing end plate (18) and an intermediate ring (15) of the housing (7) connected thereto and the die ring (13) concentrically surrounding the mixing cylinder (10) or the chamber (2) and extending at least approximately as far as a rear housing end plate (19) is secured between two intermediate rings (15).

14. Device according to either of claims 12 and 13, characterised in that the radial bores (17) of the intermediate rings (15) are distributed over its circumference.

15. Device according to one of claims 8 to 14, characterised in that the intermediate rings (15) or die rings (13) have an inwardly tapering cross section at the downstream ends.

## Revendications

1. Procédé pour fabriquer par coulage à basse pression des pièces moulées en matières plastiques thermodurcissables à plusieurs constituants, de préférence des résines, des charges et des durcisseurs, selon lequel les constituants utilisés pour former une masse en matière plastique homogène sont mélangés avant de quitter le dispositif de coulage, caractérisé en ce qu'avant le mélange, les constituants liquides sont regroupés dans une chambre en s'écoulant de façon laminaire.

2. Procédé selon la revendication 1, caractérisé en ce que les constituants liquides alimentent la chambre (2) par chaque fois une fente annulaire (3, 4).

3. Dispositif pour mettre en oeuvre le procédé selon l'une des revendications 1 et 2, qui se compose d'un carter (7) contenant un rotor (5) pouvant être entraîné pour former un mélangeur (6) dynamique, carter qui est relié aux conduites d'alimentation (8) des constituants et qui présente un orifice de sortie (9) pour la masse de matière plastique, caractérisé par une chambre (2) raccordée au cylindre mélangeur (10), à l'extrémité arrière du mélangeur (6), de manière concentrique par rapport à l'axe de rotation du rotor (5), laquelle est entourée avec un écart par plusieurs canaux d'alimentation (3, 4) annulaires associés aux différents constituants et reliée à ceux-ci par des conduites.

4. Dispositif selon la revendication 3, caractérisé en ce que les canaux d'alimentation (3, 4) débouchant dans la chambre (2) présentent des orifices de passage (11, 12) disposés de façon décalée.

5. Dispositif selon la revendication 4, caractérisé en ce que les orifices de passage (11, 12) sont disposés répartis sur l'extrémité située en aval d'au moins un canal d'alimentation (3, 4).

6. Dispositif selon l'une des revendications 3 à 5, caractérisé en ce que les canaux d'alimentation (3, 4) annulaires sont formés par au moins une bague de filière (13) disposée de façon concentrique.

7. Dispositif selon l'une des revendications 4 à 6, caractérisé en ce que les orifices de passage (11, 12) sont disposés décalés les uns par rapport aux autres aux extrémités des canaux d'alimentation (3, 4).

8. Dispositif selon l'une des revendications 3 à 7, caractérisé en ce que la bague de filière (13) forme avec le cylindre mélangeur (10) ou la paroi (14) de la chambre (2) un canal d'alimentation (3) intérieur et avec une bague intermédiaire (15) du carter (7) un canal d'alimentation (4) extérieur.

9. Dispositif selon l'une des revendications 6 à 8, caractérisé en ce qu'un épaulement (16) faisant saillie radialement vers l'extérieur ou en retrait radialement vers l'intérieur est prévu pour former les orifices de passage (11, 12) à l'extrémité de la bague de filière (13) située en aval.

10. Dispositif selon la revendication 9, caractérisé en ce que l'épaulement (16) présente des évidements répartis sur le pourtour qui forment des orifices de passage (11) s'étendant radialement.

11. Dispositif selon l'une des revendication 6 à 10, caractérisé en ce que la/les bagues(s) de filière (13) est/sont disposée(s) de manière à ne pas pouvoir être déplacée(s) axialement et est/sont fixée(s) aux bagues intermédiaires (15) formant le carter du mélangeur (7).

12. Dispositif selon l'une des revendications 8 à 11, caractérisé en ce que les bagues intermédiaires (15) formant le carter (7) sont chaque fois munies d'un perçage radial (17) reliant le canal d'alimentation (8) des constituants au canal d'alimentation (3, 4) qui lui est associé.

13. Dispositif selon l'une des revendications 8 à 12, caractérisé en ce que le cylindre mélangeur (10) présentant à son extrémité arrière une chambre (2) entre une plaque de fermeture avant du carter (18) et une bague intermédiaire (15) du carter (7) qui est raccordée à cette dernière, et les bagues de filière (13) s'étendant au moins approximativement sur une plaque de fermeture arrière du carter (19) et entourant le cylindre mélangeur (10) ou la chambre (2) sont fixés entre chaque fois deux bagues intermédiaires (15).

14. Dispositif selon l'une des revendications 12 et 13, caractérisé en ce que les perçages radiaux (17) des bagues intermédiaires (15) sont disposés répartis sur le pourtour.

15. Dispositif selon l'une des revendications 8 à 14, caractérisé en ce que les bagues intermédiaires (15) ou les bagues de filière (13) présentent aux extrémités situées en aval une section transversale se rétrécissant vers l'intérieur.
